# EUROPÄISCHE PATENTSCHRIFT

(11) **EP 3 370 909 B1**
(45) Veröffentlichungstag und Bekanntmachung des Hinweises auf die Patenterteilung: **04.09.2019**
(21) Anmeldenummer: 16785466.0
(22) Anmeldetag: 24.10.2016
(51) Int. Cl.: B23D 59/00, B27B 9/02

(54) **SCHNITTLÄNGENANZEIGEVORRICHTUNG**
CUTTING LENGTH DISPLAY DEVICE
DISPOSITIF D'AFFICHAGE DE LONGUEUR DE COUPE

(30) Priorität: 04.11.2015 DE 102015221631
(43) Veröffentlichungstag der Anmeldung: 12.09.2018
(73) Patentinhaber: Robert Bosch GmbH, 70442 Stuttgart (DE)
(72) Erfinder: KUEHN, Thorsten, 70197 Stuttgart (DE); ZIEGLER, Thomas, 71711 Steinheim An Der Murr (DE); WALL, Michael, 70178 Stuttgart (DE); MAUTE, Joerg, 71069 Sindelfingen (DE)
(86) Internationale Anmeldenummer: PCT/EP2016/075488
(87) Internationale Veröffentlichungsnummer: WO 2017/076672

(56) Entgegenhaltungen:
- DE-A1-102012 219 397

## Beschreibung

### Stand der Technik

Aus der DE 10 2012 219 397 A1 ist bereits eine Schnittlängenanzeigevorrichtung für eine Werkzeugmaschine bekannt, die eine ein beweglich gelagertes Anzeigeelement umfassende Anzeigeeinheit zu einer Anzeige zumindest einer Position einer Schnittkante eines Bearbeitungswerkzeugs auf einem zu bearbeitenden Werkstück in Abhängigkeit einer eingestellten Schnitttiefe des Bearbeitungswerkzeugs aufweist.

### Offenbarung der Erfindung

Die Erfindung geht aus von einer Schnittlängenanzeigevorrichtung für eine insbesondere tragbare Werkzeugmaschine, mit zumindest einer zumindest ein beweglich gelagertes Anzeigeelement umfassenden Anzeigeeinheit zu einer Anzeige zumindest einer Position einer Schnittkante eines Bearbeitungswerkzeugs auf einem zu bearbeitenden Werkstück in Abhängigkeit einer eingestellten Schnitttiefe des Bearbeitungswerkzeugs.

Es wird vorgeschlagen, dass die Schnittlängenanzeigevorrichtung eine Seilzugeinheit aufweist, welche dazu vorgesehen ist, eine Lage des Anzeigeelements in Abhängigkeit der eingestellten Schnitttiefe des Bearbeitungswerkzeugs zu verändern.

Das Anzeigeelement weist insbesondere in zumindest einem Betriebszustand zu einer Anzeige der Position der Schnittkante eine zumindest im Wesentlichen quer zu einer Bewegungsebene des Anzeigeelements und/oder zumindest im Wesentlichen quer zu einer Schnittebene des Bearbeitungswerkzeugs verlaufende Schnittkantenanzeigelinie auf einem zu bearbeitenden Werkstück auf. Das Anzeigeelement kann insbesondere translatorisch und/oder rotatorisch beweglich gelagert sein. Schneidkanten von Schneidzähnen des Bearbeitungswerkzeugs verlaufen vorzugsweise zumindest im Wesentlichen quer zur Schnittebene des Bearbeitungswerkzeugs. Unter "zumindest im Wesentlichen quer" soll hier insbesondere eine Ausrichtung einer Ebene und/oder einer Richtung relativ zu einer weiteren Ebene und/oder einer weiteren Richtung verstanden werden, die bevorzugt von einer parallelen Ausrichtung der Ebene und/oder der Richtung relativ zu der weiteren Ebene und/oder der weiteren Richtung abweicht. Das Bearbeitungswerkzeug ist vorzugsweise als Kreissägeblatt ausgebildet. Somit übt das Bearbeitungswerkzeug zu einer Einbringung eines Schnitts in das Werkstück vorzugsweise in der Schnittebene des Bearbeitungswerkzeugs eine rotierende Bewegung aus. Die Schnittebene verläuft zu einer Einbringung eines Schnitts in das Werkstück bevorzug zumindest im Wesentlichen quer zu einer Werkstückoberfläche des zu bearbeitenden Werkstücks.

Die vom Anzeigeelement in zumindest einem Betriebszustand auf dem Werkstück abgebildete Schnittkantenanzeigelinie weist eine maximale Länge auf, die insbesondere länger ist als 2 mm, bevorzugt länger ist als 5 mm und besonders bevorzugt länger ist als 10 mm oder die vom Anzeigeelement in zumindest einem Betriebszustand auf dem Werkstück abgebildete Schnittkantenanzeigelinie wird von einer Quererstreckung, insbesondere von einem Durchmesser, eines Lichtstrahls gebildet. Bei einer Ausgestaltung der Schnittkantenanzeigelinie als eine Quererstreckung eines Lichtstrahls weist die Schnittkantenanzeigelinie vorzugsweise eine maximale Erstreckung auf, die kleiner ist als 2 mm. Hierbei kann die Schnittkantenanzeigelinie von dem Anzeigeelement selbst gebildet sein oder von einem von dem Anzeigeelement erzeugten bzw. projizierten Lichtstrahl, insbesondere von einem von dem Anzeigeelement erzeugten bzw. projizierten Laserstrahl. Die Schnittkantenanzeigelinie zeigt zumindest einen Austrittspunkt oder Eintrittspunkt von Schneidkanten des Bearbeitungswerkzeugs, aus einem oder in ein zu bearbeitendes Werkstück auf einer Werkstückoberfläche des Werkstücks an, an dem das Bearbeitungswerkzeug bei einem Bearbeiten des Werkstücks infolge eines Erreichens einer eingestellten Schnitttiefe des Bearbeitungswerkzeugs aus dem Werkstück austreten oder in das Werkstück eintreten würde bzw. aus dem Werkstück austritt oder in das Werkstück eintritt, insbesondere entkoppelt von einer Verfahrbewegung der tragbaren Werkzeugmaschine auf der Werkstückoberfläche des Werkstücks. Das Anzeigeelement bildet die Schnittkantenanzeigelinie vorzugsweise zumindest im Wesentlichen quer, insbesondere zumindest im Wesentlichen senkrecht, zur Schnittebene des Bearbeitungswerkzeugs auf dem Werkstück ab.

Vorzugsweise weist die Anzeigeeinheit zumindest ein weiteres beweglich gelagertes Anzeigeelement auf, welches insbesondere in zumindest einem Betriebszustand zu einer Anzeige der Position einer weiteren Schnittkante eine weitere zumindest im Wesentlichen quer zu einer Bewegungsebene des Anzeigeelements und/oder zumindest im Wesentlichen quer zu einer Schnittebene des Bearbeitungswerkzeugs verlaufende Schnittkantenanzeigelinie aufweist. Bevorzugt bildet das weitere Anzeigeelement eine einem Eintrittspunkt des Bearbeitungswerkzeugs entsprechende weitere Schnittkantenanzeigelinie auf dem Werkstück ab. Das Anzeigeelement bildet hierbei vorzugsweise eine einem Austrittspunkt des Bearbeitungswerkzeugs entsprechende Schnittkantenanzeigelinie auf dem Werkstück ab. Es kann besonders vorteilhaft eine Anzeige einer Länge eines in das Werkstück einbringbaren Schnitts des Bearbeitungswerkzeugs, insbesondere entkoppelt von einer Verfahrbewegung der tragbaren Werkzeugmaschine auf der Werkstückoberfläche des Werkstücks, in Abhängigkeit einer eingestellten Schnitttiefe des Bearbeitungswerkzeugs erreicht werden.

Unter einer "Seilzugeinheit" soll in diesem Zusammenhang insbesondere eine Einheit verstanden werden, welche zumindest ein Seil aufweist, das zu einer Übertragung von zumindest einer Kraft vorgesehen ist. Insbesondere weist die Seilzugeinheit zumindest ein Zugseil auf. Unter einem "Zugseil" soll insbesondere ein Seil verstanden werden, welches dazu vorgesehen ist, mittels einer Zugbewegung zumindest einen insbesondere mechanischen Prozess zu beeinflussen. Unter einem "Seil" soll insbesondere ein längliches, biegeschlaffes Element verstanden werden. Insbesondere kann das Seil aus einer Mehrzahl insbesondere zusammengedrehter Naturfasern, Kunstfasern und/oder Drähten bestehen oder von einer Einzelfaser oder einem Einzeldraht oder einem Riemen gebildet sein. Insbesondere kann die Seilzugeinheit neben zumindest einem Seil weitere Elemente, beispielsweise feste und/oder lose Rollen oder weitere Seile, umfassen. Unter einer "Lage des Anzeigeelements" soll insbesondere eine absolute oder relative räumliche Position und/oder eine absolute oder relative räumliche Ausrichtung verstanden werden.

Durch eine derartige Ausgestaltung kann eine Schnittlängenanzeigevorrichtung bereitgestellt werden, welche eine Anzeige einer Schnittkantenanzeigelinie ermöglicht. Ferner kann die Schnittlängenanzeigevorrichtung durch Verwendung einer Seilzugeinheit kompakt, robust und/oder preisgünstig ausgeführt werden.

Des Weiteren wird vorgeschlagen, dass die Seilzugeinheit zumindest ein um eine Drehachse drehbar gelagertes Kurvenelement und zumindest ein Zugseil aufweist, welches dazu vorgesehen ist, das Kurvenelement durch Abwickeln entlang zumindest einer Kurvenoberfläche des Kurvenelements in eine Drehbewegung zu versetzen. Insbesondere ist das Zugseil dazu vorgesehen, das Kurvenelement in Abhängigkeit der eingestellten Schnitttiefe des Bearbeitungswerkzeugs und insbesondere während eines Einstellvorgangs zur Einstellung einer Schnitttiefe des Bearbeitungswerkzeugs in eine Drehbewegung zu versetzen. Die Drehbewegung ist dazu vorgesehen, eine Veränderung der Lage des Anzeigeelements zu bewirken. Das Kurvenelement kann insbesondere zumindest im Wesentlichen scheibenförmig ausgebildet sein. Das Zugseil ist in zumindest einem Betriebszustand zumindest teilweise auf zumindest einen Abschnitt der Kurvenoberfläche des Kurvenelements aufgewickelt. Ein Ende des Zugseils ist fest mit dem Kurvenelement, insbesondere an der Kurvenoberfläche des Kurvenelements befestigt. Ein Abwickeln des Zugseils entlang der Kurvenoberfläche erfolgt insbesondere mittels Ausübung einer Zugkraft auf das Zugseil. Insbesondere weist die Seilzugeinheit ein Rückstellelement, insbesondere eine Rückstellfeder auf, welches dazu vorgesehen ist, eine entgegen der durch das Zugseil bewirkten Drehbewegung gerichtete Rückstellkraft auf das Kurvenelement auszuüben. Hierdurch kann auf vorteilhaft einfache und/oder zuverlässige Weise eine Lage des Anzeigeelements in Abhängigkeit der eingestellten Schnitttiefe des Bearbeitungswerkzeugs verändert werden.

Zudem wird vorgeschlagen, dass wenigstens zwei Punkte der Kurvenoberfläche des Kurvenelements zur Erzielung einer Veränderung einer Drehgeschwindigkeit des Kurvenelements während einer gleichförmigen Bewegung des Zugseils verschiedene Abstände zur Drehachse aufweisen. Eine Drehgeschwindigkeit, insbesondere eine Veränderung der Drehgeschwindigkeit, des Kurvenelements bei einer Veränderung der Schnitttiefe des Bearbeitungswerkzeugs und einer daraus resultierenden Bewegung des Zugseils ist insbesondere abhängig von einem Verhältnis der Abstände der wenigstens zwei Punkte zur Drehachse. Insbesondere nimmt eine Drehgeschwindigkeit des Kurvenelements während eines Abwickelns des Zugsseils von dem Kurvenelement mit zunehmender Abwickellänge des Zugseils ab. Ein Verhältnis der Abstände der wenigstens zwei Punkte zur Drehachse ist insbesondere auf ein von einer Geometrie des Bearbeitungswerkzeugs bestimmten Bewegungsprofil der Schnittkanten des Bearbeitungswerkzeugs bei einer Veränderung der Schnitttiefe des Bearbeitungswerkzeugs abgestimmt. Insbesondere ändert sich während eines Aufwickelns oder eines Abwickelns des Zugseils ein Drehwinkel des Kurvenelements um die Drehachse, wobei eine Veränderung des Drehwinkels auf ein von einer Geometrie des Bearbeitungswerkzeugs bestimmten Bewegungsprofil der Schnittkanten des Bearbeitungswerkzeugs bei einer Veränderung der Schnitttiefe des Bearbeitungswerkzeugs abgestimmt ist. Hierdurch kann eine vorteilhaft exakte Anzeige einer Position einer Schnittkante eines Bearbeitungswerkzeugs erreicht werden.

In einer bevorzugten Ausgestaltung der Erfindung wird vorgeschlagen, dass das Zugseil zumindest abschnittsweise über eine Außenkontur des Kurvenelements geführt ist, welche in zumindest einem Abschnitt verschiedene Außenradien aufweist. Insbesondere weist die Außenkontur zumindest eine Führungsbahn auf, welche dazu vorgesehen ist, das Zugseil in einem aufgewickelten Zustand aufzunehmen. Die Führungsbahn kann insbesondere seitliche Begrenzungswandungen aufweisen, welche dazu vorgesehen sind, ein seitliches Abrutschen des Zugseils zu verhindern. Der zumindest eine Abschnitt der Außenkontur weist insbesondere einen bogenförmigen Verlauf auf, dessen Außenradius entgegen einer Abwickelrichtung des Zugseils kontinuierlich zunimmt. Hierdurch kann ein Bewegungsprofil des Anzeigeelements vorteilhaft auf ein Bewegungsprofil der Schnittkanten eines kreisförmigen Bearbeitungswerkzeugs bei einer Veränderung der Schnitttiefe des Bearbeitungswerkzeugs abgestimmt werden.

In einer weiteren bevorzugten Ausgestaltung der Erfindung wird vorgeschlagen, dass das Kurvenelement zumindest eine insbesondere archimedische Spiralbahn aufweist, entlang welcher das Zugseil zumindest abschnittsweise geführt ist. Die Spiralbahn kann insbesondere seitliche Begrenzungswandungen aufweisen, welche dazu vorgesehen sind, ein seitliches Abrutschen des Zugseils zu verhindern. Insbesondere verläuft die Spiralbahn auf einer zumindest im Wesentlichen senkrecht zu der Drehachse des Kurvenelements angeordneten Fläche des Kurvenelements. Ein Ende des Zugseils ist insbesondere in einem Zentrum der von der Spiralbahn ausgebildeten Spirale befestigt. Ein Abwickeln des Zugseils erfolgt insbesondere von außen nach innen entlang der Spiralbahn. Hierdurch kann ein Bewegungsprofil des Anzeigeelements vorteilhaft auf ein Bewegungsprofil der Schnittkanten eines kreisförmigen Bearbeitungswerkzeugs bei einer Veränderung der Schnitttiefe des Bearbeitungswerkzeugs abgestimmt werden.

Zudem wird vorgeschlagen, dass das Anzeigeelement drehfest mit dem Kurvenelement verbunden ist. Darunter, dass das Anzeigeelement mit dem Kurvenelement "drehfest verbunden" ist, soll insbesondere verstanden werden, dass ein Drehmoment und/oder vorzugsweise eine Drehbewegung des Kurvenelements unverändert auf das Anzeigeelement übertragen wird. Insbesondere kann das Anzeigeelement insbesondere an einer Außenkontur des Kurvenelements insbesondere kraftschlüssig und/oder formschlüssig befestigt und/oder zumindest teilweise einstückig mit dem Kurvenelement, insbesondere mit einer Außenkontur des Kurvenelements, ausgebildet sein. Hierdurch kann auf vorteilhaft einfache und/oder zuverlässige Weise eine Lage des Anzeigeelements in Abhängigkeit der eingestellten Schnitttiefe des Bearbeitungswerkzeugs verändert werden.

Ferner wird vorgeschlagen, dass die Schnittlängenanzeigevorrichtung zumindest eine Führungseinheit aufweist, entlang welcher das Anzeigeelement verschiebbar gelagert ist. Unter einer "Führungseinheit" soll insbesondere eine Einheit verstanden werden, die dazu vorgesehen ist, das Anzeigeelement entlang einer Strecke, vorzugsweise entlang einer Geraden, beweglich zu führen. Insbesondere weist die Führungseinheit zumindest ein Führungsmittel, beispielsweise eine Führungsschiene, auf. Das Führungsmittel verläuft insbesondere zumindest im Wesentlichen parallel zu einer Schnittebene des Bearbeitungswerkzeugs. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Insbesondere kann die Führungseinheit zumindest ein Lager, insbesondere ein Rollenlager, ein Kugellager und/oder ein Gleitlager, aufweisen welches dazu vorgesehen ist, eine Reibung zwischen dem Anzeigeelement und dem Führungsmittel zu reduzieren. Hierdurch kann eine vorteilhaft flexible Platzierung des Anzeigeelements ermöglicht werden. Ferner kann eine Anwendung verschiedener Anzeigeelemente, insbesondere Anzeigeelemente mit Lichtzeigern und/oder mechanischen Zeigern, ermöglicht werden.

Des Weiteren wird vorgeschlagen, dass die Seilzugeinheit zumindest ein weiteres Zugseil aufweist, welches dazu vorgesehen ist, eine Drehbewegung des Kurvenelements in eine Bewegung des Anzeigeelements entlang der Führungseinheit zu überführen. Insbesondere ist das weitere Zugseil zumindest teilweise auf eine um die Drehachse des Kurvenelements drehbar gelagerte, insbesondere mit dem Kurvenelement drehfest verbundenen, Spulrolle aufgewickelt. Insbesondere ist ein Ende des zweiten Zugseils fest mit dem Anzeigeelement verbunden. Die Seilzugeinheit weist insbesondere eine Umlenkrolle auf, welche dazu vorgesehen ist, das zweite Zugseil derart umzulenken, dass dieses zumindest abschnittsweise zumindest im Wesentlichen parallel zu einem Führungsmittel der Führungseinheit verläuft. Eine Drehbewegung des Kurvenelements bewirkt insbesondere ein Abwickeln des zweiten Zugseils von der Spulrolle oder ein Aufwickeln des zweiten Zugseils von der Spulrolle. Bei einem Aufwickeln des zweiten Zugseils auf die Spulrolle ist das zweite Zugseil insbesondere dazu vorgesehen, eine Zugkraft auf das Anzeigeelement auszuüben. Die auf das Anzeigeelement ausgeübte Zugkraft ist insbesondere dazu vorgesehen, das Anzeigeelement entlang der Führungseinheit, insbesondere entlang eines Führungselements der Führungseinheit, zu bewegen. Insbesondere weist die Seilzugeinheit zumindest eine Rückstellfeder auf, welche dazu vorgesehen ist, eine der durch das zweite Zugseil ausgeübten Zugkraft entgegengesetzte Kraft auf das Anzeigeelement auszuüben. Hierdurch kann auf vorteilhaft einfache und/oder zuverlässige Weise eine Lage des Anzeigeelements in Abhängigkeit der eingestellten Schnitttiefe des Bearbeitungswerkzeugs verändert werden.

Zudem wird vorgeschlagen, dass die Seilzugeinheit zumindest eine Spannrolle aufweist, welche dazu vorgesehen ist, eine Zuglänge des Zugseils zu variieren. Insbesondere ist eine Position der Spannrolle relativ zu dem Zugseil veränderbar. Hierdurch kann eine vorteilhaft einfache Anpassung an Bearbeitungswerkzeuge mit unterschiedlichen Werkzeugdurchmessern erfolgen.

Zudem wird vorgeschlagen, dass die Anzeigeeinheit als Laseranzeigeeinheit ausgebildet ist. Somit sind das Anzeigeelement und das weitere Anzeigeelement bevorzugt jeweils als Laseranzeigeelement ausgebildet. Das Anzeigeelement und das weitere Anzeigeelement sind bevorzugt als Laserdioden ausgebildet. Vorzugsweise projizieren das Anzeigeelement und das weitere Anzeigeelement die Schnittkantenanzeigelinie und die weitere Schnittkantenanzeigelinie in zumindest einem Betriebszustand auf das zu bearbeitende Werkstück. Somit bildet das Anzeigeelement in zumindest einem Betriebszustand zu einer Anzeige der Position der weiteren Schnittkante eine zumindest im Wesentlichen quer zu einer Bewegungsebene des Anzeigeelements und/oder zumindest im Wesentlichen quer zu einer Schnittebene des Bearbeitungswerkzeugs verlaufende Schnittkantenanzeigelinie auf einem zu bearbeitenden Werkstück ab. Ferner bildet somit das weitere Anzeigeelement in zumindest einem Betriebszustand zu einer Anzeige der Position der weiteren Schnittkante eine weitere zumindest im Wesentlichen quer zu einer Bewegungsebene des Anzeigeelements und/oder zumindest im Wesentlichen quer zu einer Schnittebene des Bearbeitungswerkzeugs verlaufende Schnittkantenanzeigelinie auf einem zu bearbeitenden Werkstück ab. Es kann eine besonders komfortabel ablesbare Schnittlängenanzeigevorrichtung realisiert werden.

Ferner wird eine Werkzeugmaschine, insbesondere tragbare Werkzeugmaschine, insbesondere Kreissäge, mit zumindest einer erfindungsgemäßen Schnittlängenanzeigevorrichtung vorgeschlagen. Unter einer "tragbaren Werkzeugmaschine" soll hier insbesondere eine Werkzeugmaschine, insbesondere eine Handwerkzeugmaschine, verstanden werden, die von einem Bediener transportmaschinenlos transportiert werden kann. Die tragbare Werkzeugmaschine weist insbesondere eine Masse auf, die kleiner ist als 40 kg, bevorzugt kleiner als 10 kg und besonders bevorzugt kleiner als 5 kg. Besonders bevorzugt ist die tragbare Werkzeugmaschine als Tauchkreissäge ausgebildet. Es ist jedoch auch denkbar, dass die Werkzeugmaschine eine andere, einem Fachmann als sinnvoll erscheinende Ausgestaltung aufweist. Vorzugsweise weist die Werkzeugmaschine eine Schnitttiefeneinstelleinheit auf, welche dazu vorgesehen ist, eine Schnitttiefe des mit einer Werkzeugaufnahme der tragbaren Werkzeugmaschine koppelbaren Bearbeitungswerkzeugs einzustellen. Der Ausdruck "Schnitttiefeneinstelleinheit" soll hier insbesondere eine Einheit definieren, die dazu vorgesehen ist, eine Eintauchstrecke des mit der Werkzeugaufnahme der tragbaren Werkzeugmaschine verbundenen Bearbeitungswerkzeugs, insbesondere eines Kreissägeblatts, in ein zu bearbeitendes Werkstück zu begrenzen und/oder eine Länge einer Eintauchstrecke des Bearbeitungswerkzeugs in das zu bearbeitende Werkstück einzustellen. Die Eintauchstrecke des Bearbeitungswerkzeugs in das zu bearbeitende Werkstück wird hierbei insbesondere entlang einer zumindest im Wesentlichen senkrecht zu einer Auflagefläche einer Auflageeinheit der tragbaren Werkzeugmaschine, mit der die tragbare Werkzeugmaschine auf einer Werkstückoberfläche eines zu bearbeitenden Werkstücks aufliegt, verlaufenden Richtung betrachtet. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Hierdurch kann eine vorteilhaft präzise Bearbeitung eines Werkstücks mittels der tragbaren Werkzeugmaschine erreicht werden.

Ferner wird vorgeschlagen, dass die Schnittlängenanzeigevorrichtung zumindest die Bewegungskopplungseinheit umfasst, die dazu vorgesehen ist, zumindest das Anzeigeelement in Abhängigkeit einer Bewegung eines Schnitttiefeneinstellelements der Schnitttiefeneinstelleinheit zu bewegen. Das Schnitttiefeneinstellelement ist besonders bevorzugt als Tiefenanschlag ausgebildet, der eine Eintauchstrecke des mit einer Werkzeugaufnahme der tragbaren Werkzeugmaschine verbundenen Bearbeitungswerkzeugs, insbesondere eines Kreissägeblatts, in das zu bearbeitende Werkstück begrenzt und/oder mittels dessen eine Länge der Eintauchstrecke einstellbar ist. Hierdurch kann vorteilhaft eine Kopplung des Anzeigeelements mit dem Schnitttiefeneinstellelement erreicht werden. Somit kann vorteilhaft eine von einer Position des Schnitttiefeneinstellelements abhängige Einstellung einer Position des Anzeigeelements erreicht werden. Es kann hierdurch vorteilhaft eine präzise Anzeige einer Schnittlänge des Bearbeitungswerkzeugs in Abhängigkeit einer eingestellten Schnitttiefe des Bearbeitungswerkzeugs erreicht werden.

Die erfindungsgemäße Schnittlängenanzeigevorrichtung und/oder die erfindungsgemäße Werkzeugmaschine soll/sollen hierbei nicht auf die oben beschriebene Anwendung und Ausführungsform beschränkt sein. Insbesondere können die erfindungsgemäße Schnittlängenanzeigevorrichtung und/oder die erfindungsgemäße Werkzeugmaschine zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination.

Es zeigen:
- Fig. 1: eine vereinfachte Darstellung einer Werkzeugmaschine, die eine Schnittlängenanzeigevorrichtung mit einer Seilzugeinheit aufweist,
- Fig. 2: ein Kurvenelement der Seilzugeinheit aus Figur 1,
- Fig. 3: ein alternatives Kurvenelement einer Seilzugeinheit und
- Fig. 4: eine vereinfachte Darstellung einer Werkzeugmaschine, die eine alternative Schnittlängenanzeigevorrichtung mit einer Seilzugeinheit aufweist.

### Beschreibung der Ausführungsbeispiele

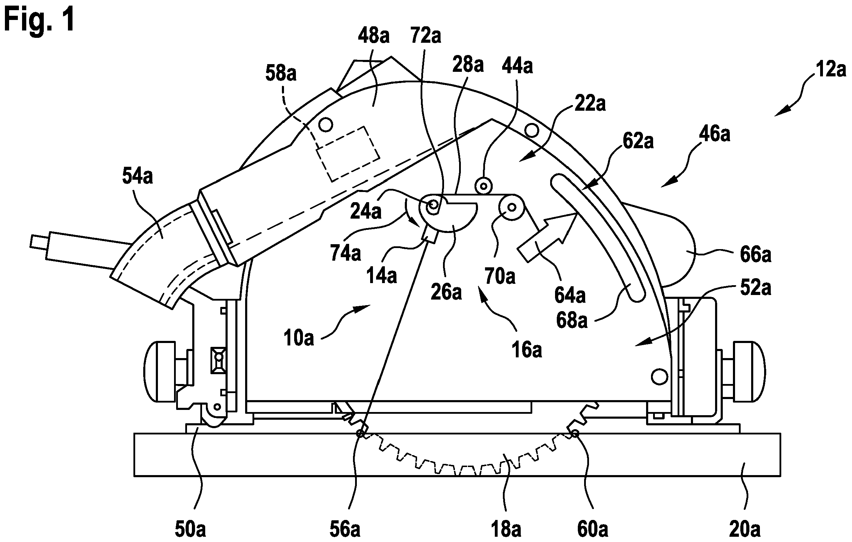

Figur 1 zeigt eine vereinfachte Darstellung einer als Kreissäge, insbesondere als Tauchkreissäge, ausgebildete tragbare Werkzeugmaschine 12a. Die als Tauchkreissäge ausgebildete tragbare Werkzeugmaschine 12a umfasst eine Schnitttiefeneinstelleinheit 46a zu einer Einstellung einer Schnitttiefe eines Bearbeitungswerkzeugs 18a und zumindest eine Schnittlängenanzeigevorrichtung 10a. Mittels einer Einstellung einer Position eines Schnitttiefeneinstellelements 66a kann eine Schnitttiefe des Bearbeitungswerkzeugs 18a auf eine, einem Fachmann bereits bekannte Art und Weise eingestellt werden. Das Bearbeitungswerkzeug 18a ist mit einer Werkzeugaufnahme (hier nicht näher dargestellt) der tragbaren Werkzeugmaschine 12a verbunden. Die tragbare Werkzeugmaschine 12a umfasst ferner ein Werkzeugmaschinengehäuse 48a, das dazu vorgesehen ist, eine nicht dargestellte Antriebseinheit der tragbaren Werkzeugmaschine 12a zu umschließen. Die Antriebseinheit umfasst eine Antriebswelle, die zu einem Antrieb des mit der Werkzeugaufnahme koppelbaren Bearbeitungswerkzeugs 18a auf eine, einem Fachmann bereits bekannte Art und Weise vorgesehen ist.

Ferner umfasst die tragbare Werkzeugmaschine 12a eine als Grundplatte oder als Gleitschuh ausgebildete Auflageeinheit 50a mit der die tragbare Werkzeugmaschine 12a bei einer Bearbeitung eines Werkstücks 20a auf einer Werkstückoberfläche des Werkstücks 20a aufliegt bzw. bei einer Bewegung zu einer Einbringung eines Schnitts in das Werkstück 20a auf der Werkstückoberfläche gleitet. An der Auflageeinheit 50a ist zudem eine Schutzeinheit 52a der tragbaren Werkzeugmaschine 12a angeordnet, welche dazu vorgesehen ist, einen Bediener vor Verletzungen bei einer Bearbeitung des Werkstücks 20a zu schützen. Hierbei ist die Schutzeinheit 52a als Schutzhaube ausgebildet, die das Bearbeitungswerkzeug 18a in einem montierten Zustand entlang einer Rotationsrichtung der Antriebswelle um mehr als 160° umschließt. Die Schutzeinheit 52a weist ferner ein Absaugkopplungselement 54a auf, das mit einer Absaugeinheit (hier nicht näher dargestellt) zu einer Absaugung von abgetragenen Werkstückpartikeln während einer Bearbeitung des Werkstücks 20a verbindbar ist.

Die Schnittlängenanzeigevorrichtung 10a für die tragbare Werkzeugmaschine 12a weist zumindest eine zumindest ein beweglich gelagertes Anzeigeelement 14a umfassende Anzeigeeinheit 16a zu einer Anzeige zumindest einer Position einer Schnittkante des Bearbeitungswerkzeugs 18a auf dem zu bearbeitenden Werkstück 20a in Abhängigkeit einer eingestellten Schnitttiefe des Bearbeitungswerkzeugs 18a auf. Die Schnitttiefe des Bearbeitungswerkzeugs 18a ist mittels der Schnitttiefeneinstelleinheit 46a einstellbar. Vorzugsweise weist die Anzeigeeinheit 16a zumindest ein weiteres beweglich gelagertes Anzeigeelement (hier nicht dargestellt) auf, welches dazu vorgesehen ist in zumindest einem Betriebszustand zumindest eine Position einer weiteren Schnittkante des Bearbeitungswerkzeugs 18a anzuzeigen. Vorzugsweise ist das weitere Anzeigeelement zumindest im Wesentlichen identisch mit dem Anzeigeelement 14a ausgebildet. Die Anzeigeeinheit 16a ist als Laseranzeigeeinheit ausgebildet. Das Anzeigeelement 14a ist als Laseranzeigeelement ausgebildet. Das Anzeigeelement 14a bildet in zumindest einem Betriebszustand zu einer Anzeige der Position der Schnittkante eine zumindest im Wesentlichen quer zu einer Schnittebene des Bearbeitungswerkzeugs 18a verlaufende Schnittkantenanzeigelinie 56a auf dem zu bearbeitenden Werkstück 20a ab. Die Schnittkantenanzeigelinie 56a des Anzeigeelements 14a wird hierbei von einer Laserlinie gebildet. Das Anzeigeelement 14a wird zu einer Erzeugung eines Laserstrahls durch eine Energieeinheit 58a der Schnittlängenanzeigevorrichtung 10a bzw. der tragbaren Werkzeugmaschine 12a mit Energie versorgt. Hierbei kann die Energieeinheit 58a von einem separaten Akkumulator-Paket gebildet sein oder die Energieeinheit 58a ist elektrisch mit einer Energieversorgungseinheit (hier nicht näher dargestellt) der tragbaren Werkzeugmaschine 12a elektrisch verbunden.

Die von dem Anzeigeelement 14a auf dem Werkstück 20a abgebildete Schnittkantenanzeigelinie 56a ist dazu vorgesehen, eine Position einer, betrachtet entlang einer entgegen einer Bewegungsrichtung der tragbaren Werkzeugmaschine 12a zu einer Einbringung eines Schnitts in das Werkstück 20a verlaufenden Richtung, hintere Schnittkante des Bearbeitungswerkzeugs 18a auf dem zu bearbeitenden Werkstück 20a anzuzeigen. Die hintere Schnittkante des Bearbeitungswerkzeugs 18a entspricht einer hinteren Austrittskante von Schneidkanten des Bearbeitungswerkzeugs 18a aus dem zu bearbeitenden Werkstück 20a bei einem Erreichen einer mittels der Schnitttiefeneinstelleinheit 46a eingestellten Schnitttiefe des Bearbeitungswerkzeugs 18a. Eine von dem weiteren Anzeigeelement auf dem Werkstück 20a abgebildete Schnittkantenanzeigelinie 60a kann insbesondere dazu vorgesehen sein, eine Position einer, betrachtet entlang der entgegen der Bewegungsrichtung der tragbaren Werkzeugmaschine 12a zu einer Einbringung eines Schnitts in das Werkstück 20a verlaufenden Richtung, vorderen Schnittkante des Bearbeitungswerkzeugs 18a auf dem zu bearbeitenden Werkstück 20a anzuzeigen. Die vordere Schnittkante des Bearbeitungswerkzeugs 18a entspricht einer vorderen Eintrittskante von Schneidkanten des Bearbeitungswerkzeugs 18a in das zu bearbeitende Werkstück 20a bei einem Erreichen einer mittels der Schnitttiefeneinstelleinheit 46a eingestellten Schnitttiefe des Bearbeitungswerkzeugs 18a.

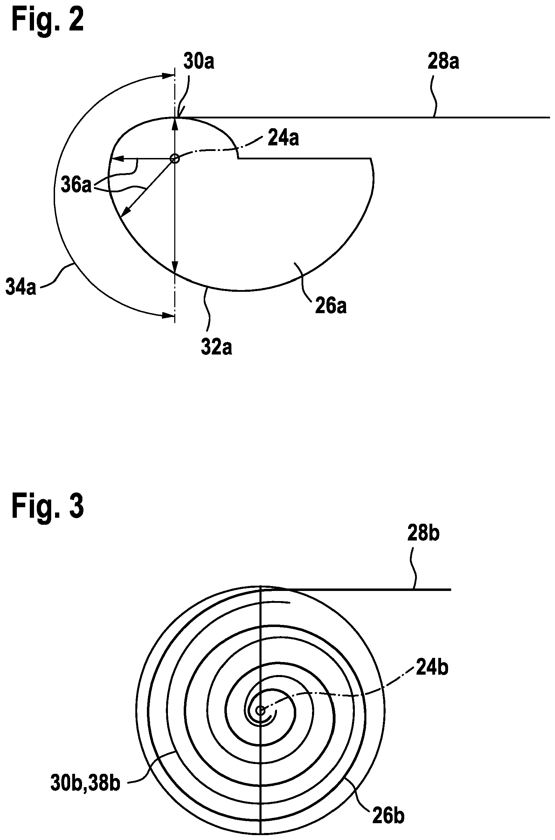

Des Weiteren weist die Schnittlängenanzeigevorrichtung 10a eine Seilzugeinheit 22a auf, welche dazu vorgesehen ist, eine Lage des Anzeigeelements 14a in Abhängigkeit der eingestellten Schnitttiefe des Bearbeitungswerkzeugs 18a zu verändern. Die Seilzugeinheit 22a weist zumindest ein um eine Drehachse 24a drehbar gelagertes Kurvenelement 26a und zumindest ein Zugseil 28a auf, welches dazu vorgesehen ist, das Kurvenelement 26a durch Abwickeln entlang zumindest einer Kurvenoberfläche 30a des Kurvenelements 26a in eine Drehbewegung zu versetzen. Das Kurvenelement 26a ist mittels eines Rückstellelements 72a mit einer entgegen einer Zugrichtung des Zugseils 28a wirkenden Rückstellkraft 74a beaufschlagt. Die Drehbewegung des Kurvenelements 26a ist dazu vorgesehen, eine Veränderung der Lage des Anzeigeelements 14a zu bewirken. Wenigstens zwei Punkte der Kurvenoberfläche 30a des Kurvenelements 26a weisen zur Erzielung einer Veränderung einer Drehgeschwindigkeit des Kurvenelements 26a während einer gleichförmigen Bewegung des Zugseils 28a verschiedene Abstände zur Drehachse 24a auf. Das Zugseil 28a ist zumindest abschnittsweise über eine Außenkontur 32a des Kurvenelements 26a geführt, welche in zumindest einem Abschnitt 34a verschiedene Außenradien 36a aufweist (vgl. Figur 2). Das Anzeigeelement 14a ist drehfest mit dem Kurvenelement 26a verbunden. Zudem weist die Seilzugeinheit 22a eine Spannrolle 44a auf, welche dazu vorgesehen ist, eine Zuglänge des Zugseils 42a zu variieren, wodurch die Anzeigeeinheit 16a an Bearbeitungswerkzeuge 18a mit unterschiedlichen Durchmessern angepasst werden kann.

Des Weiteren umfasst die Schnittlängenanzeigevorrichtung 10a eine Bewegungskopplungseinheit 62a, die die Seilzugeinheit 22a der Anzeigeeinheit 16a bewegungsabhängig mit dem Schnitttiefeneinstellelement 66a der Schnitttiefeneinstelleinheit 46a verbindet. Ein Ende des Zugseils 28a ist mit einem Bewegungskopplungselement 64a der Bewegungskopplungseinheit 62a verbunden. Zwischen dem Kurvenelement 26a und dem Bewegungskopplungselement 64a ist das Zugseil 28a mittels einer Umlenkrolle 70a umgelenkt. Das Schnitttiefeneinstellelement 66a ist zu einer Einstellung einer Schnitttiefe des Bearbeitungswerkzeugs 18a beweglich an einem Führungsbahnelement 68a der Schnitttiefeneinstelleinheit 46a gelagert. Das Führungsbahnelement 68a ist an der Schutzeinheit 52a angeordnet. Bei einer Bewegung des Schnitttiefeneinstellelements 66a relativ zum Führungsbahnelement 68a wird das Bewegungskopplungselement 64a infolge der Verbindung mit dem Schnitttiefeneinstellelement 66a ebenfalls relativ zum Führungsbahnelement 68a entlang eines Verlaufs des Führungsbahnelements 68a bewegt, wodurch eine Bewegung des Zugseils 28a bewirkt wird. Die Bewegung des Zugseils 28a resultiert in einer Drehbewegung des Kurvenelements 26a und einem damit verbundenen Verschwenken des Anzeigeelements 14a. Ein Verschwenken des weiteren Anzeigeelements kann in gleicher Weise realisiert werden.

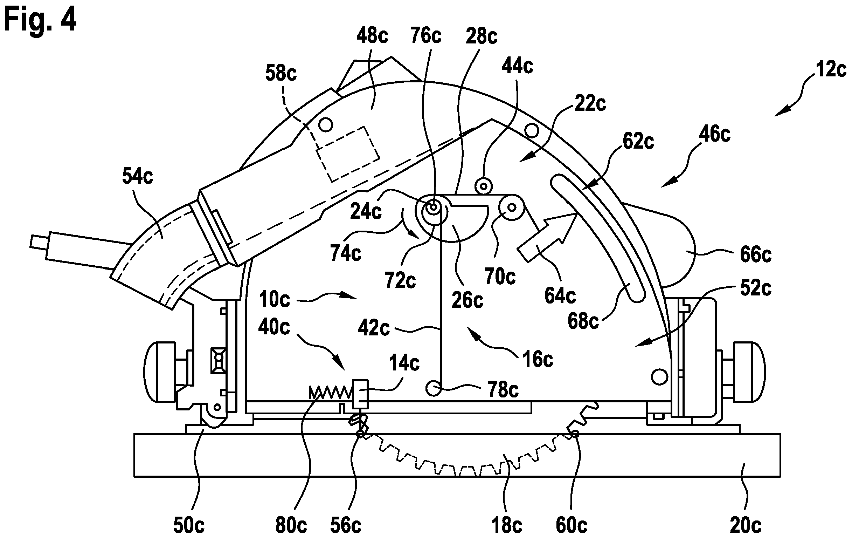

In den Figuren 3 und 4 sind alternative Ausführungsbeispiele dargestellt. Im Wesentlichen gleichbleibende Bauteile, Merkmale und Funktionen sind grundsätzlich mit den gleichen Bezugszeichen beziffert. Zur Unterscheidung der Ausführungsbeispiele sind den Bezugszeichen der Ausführungsbeispiele die Buchstaben a bis c hinzugefügt. Die nachfolgende Beschreibung beschränkt sich im Wesentlichen auf die Unterschiede zu dem in den Figuren 1 und 2 beschriebenen ersten Ausführungsbeispiel, wobei bezüglich gleichbleibender Bauteile, Merkmale und Funktionen auf die Beschreibung des ersten Ausführungsbeispiels in den Figuren 1 bis 4 verwiesen werden kann. In den Ausführungsbeispielen der Figuren 3 und 4 ist der Buchstabe a durch die Buchstaben b und c ersetzt.

Figur 3 zeigt eine alternative Ausgestaltung eines Kurvenelements 26b einer Seilzugeinheit 22b. Das Kurvenelement 26b weist eine insbesondere archimedische Spiralbahn 38b auf, entlang welcher ein Zugseil 28b der Seilzugeinheit 22b abschnittsweise geführt ist. Das Zugseil 28b ist dazu vorgesehen, das Kurvenelement 26b durch Abwickeln entlang einer Kurvenoberfläche 30b des Kurvenelements 26b in eine Drehbewegung zu versetzen. Wenigstens zwei Punkte der Kurvenoberfläche 30b des Kurvenelements 26b weisen zur Erzielung einer Veränderung einer Drehgeschwindigkeit des Kurvenelements 26b während einer gleichförmigen Bewegung des Zugseils 28b verschiedene Abstände zur Drehachse 24b auf.

Figur 4 zeigt eine als Tauchkreissäge ausgebildete tragbare Werkzeugmaschine 12c, die zumindest eine Schnitttiefeneinstelleinheit 46c zu einer Einstellung einer Schnitttiefe eines Bearbeitungswerkzeugs 18c und zumindest eine Schnittlängenanzeigevorrichtung 10c umfasst. Die tragbare Werkzeugmaschine 12c weist eine zumindest im Wesentlichen analoge Ausgestaltung zu der in den Figuren 1 und 2 beschriebenen tragbaren Werkzeugmaschine 12a auf. Die Schnittlängenanzeigevorrichtung 10c für die tragbare Werkzeugmaschine 12c weist zumindest eine zumindest ein beweglich gelagertes Anzeigeelement 14c umfassende Anzeigeeinheit 16c zu einer Anzeige zumindest einer Position einer Schnittkante des Bearbeitungswerkzeugs 18c auf dem zu bearbeitenden Werkstück 20c in Abhängigkeit einer eingestellten Schnitttiefe des Bearbeitungswerkzeugs 18c auf. Die Schnitttiefe des Bearbeitungswerkzeugs 18c ist mittels der Schnitttiefeneinstelleinheit 46c einstellbar. Vorzugsweise weist die Anzeigeeinheit 16c zumindest ein weiteres beweglich gelagertes Anzeigeelement (hier nicht dargestellt) auf, welches dazu vorgesehen ist in zumindest einem Betriebszustand zumindest eine Position einer weiteren Schnittkante des Bearbeitungswerkzeugs 18c anzuzeigen. Vorzugsweise ist das weitere Anzeigeelement zumindest im Wesentlichen identisch mit dem Anzeigeelement 14c ausgebildet. Die Anzeigeeinheit 16c ist als Laseranzeigeeinheit ausgebildet. Das Anzeigeelement 14c ist als Laseranzeigeelement ausgebildet. Das Anzeigeelement 14c bildet in zumindest einem Betriebszustand zu einer Anzeige der Position der Schnittkante eine zumindest im Wesentlichen quer zu einer Schnittebene des Bearbeitungswerkzeugs 18a verlaufende Schnittkantenanzeigelinie 56c auf dem zu bearbeitenden Werkstück 20a ab. Die Schnittkantenanzeigelinie 56c des Anzeigeelements 14c wird hierbei von einer Laserlinie gebildet. Das Anzeigeelement 14c wird zu einer Erzeugung eines Laserstrahls durch eine Energieeinheit 58c der Schnittlängenanzeigevorrichtung 10c bzw. der tragbaren Werkzeugmaschine 12c mit Energie versorgt. Hierbei kann die Energieeinheit 58c von einem separaten Akkumulator-Paket gebildet sein oder die Energieeinheit 58c ist elektrisch mit einer Energieversorgungseinheit (hier nicht näher dargestellt) der tragbaren Werkzeugmaschine 12c elektrisch verbunden. Die Schnittlängenanzeigevorrichtung 10c weist eine Führungseinheit 40c auf, entlang welcher das Anzeigeelement 14c verschiebbar gelagert ist.

Die von dem Anzeigeelement 14c auf dem Werkstück 20c abgebildete Schnittkantenanzeigelinie 56c ist hierbei dazu vorgesehen, eine Position einer, betrachtet entlang einer entgegen einer Bewegungsrichtung der tragbaren Werkzeugmaschine 12c zu einer Einbringung eines Schnitts in das Werkstück 20c verlaufenden Richtung, hinteren Schnittkante des Bearbeitungswerkzeugs 18c auf dem zu bearbeitenden Werkstück 20c anzuzeigen. Die hintere Schnittkante des Bearbeitungswerkzeugs 18c entspricht einer hinteren Austrittskante von Schneidkanten des Bearbeitungswerkzeugs 18c aus dem zu bearbeitenden Werkstück 20c bei einem Erreichen einer mittels der Schnitttiefeneinstelleinheit 46c eingestellten Schnitttiefe des Bearbeitungswerkzeugs 18c. Eine von dem weiteren Anzeigeelement auf dem Werkstück 20c abgebildete Schnittkantenanzeigelinie 60c kann insbesondere dazu vorgesehen sein, eine Position einer, betrachtet entlang der entgegen der Bewegungsrichtung der tragbaren Werkzeugmaschine 12c zu einer Einbringung eines Schnitts in das Werkstück 20c verlaufenden Richtung, vorderen Schnittkante des Bearbeitungswerkzeugs 18c auf dem zu bearbeitenden Werkstück 20c anzuzeigen. Die vordere Schnittkante des Bearbeitungswerkzeugs 18c entspricht einer vorderen Eintrittskante von Schneidkanten des Bearbeitungswerkzeugs 18c in das zu bearbeitende Werkstück 20c bei einem Erreichen einer mittels der Schnitttiefeneinstelleinheit 46c eingestellten Schnitttiefe des Bearbeitungswerkzeugs 18c.

Des Weiteren weist die Schnittlängenanzeigevorrichtung 10c eine Seilzugeinheit 22c auf, welche dazu vorgesehen ist, eine Lage des Anzeigeelements 14c in Abhängigkeit der eingestellten Schnitttiefe des Bearbeitungswerkzeugs 18c zu verändern. Die Seilzugeinheit 22c weist zumindest ein um eine Drehachse 24c drehbar gelagertes Kurvenelement 26c und zumindest ein Zugseil 28c auf, welches dazu vorgesehen ist, das Kurvenelement 26c durch Abwickeln entlang zumindest einer Kurvenoberfläche 30c des Kurvenelements 26c in eine Drehbewegung zu versetzen. Das Kurvenelement 26c ist mittels eines Rückstellelements 72c mit einer entgegen einer Zugrichtung des Zugseils 28c wirkenden Rückstellkraft 74c beaufschlagt. Die Drehbewegung des Kurvenelements 26c ist dazu vorgesehen, eine Veränderung der Lage des Anzeigeelements 14c zu bewirken. Wenigstens zwei Punkte der Kurvenoberfläche 30c des Kurvenelements 26c weisen zur Erzielung einer Veränderung einer Drehgeschwindigkeit des Kurvenelements 26c während einer gleichförmigen Bewegung des Zugseils 28c verschiedene Abstände zur Drehachse 24c auf. Das Zugseil 28c ist zumindest abschnittsweise über eine Außenkontur 32c des Kurvenelements 26c geführt, welche in zumindest einem Abschnitt 34c verschiedene Außenradien 36c aufweist (vgl. Figur 2). Alternativ kann ein Kurvenelement 26c mit einer Spiralbahn 38c (vgl. Figur 3) vorgesehen werden. Ferner weist die Seilzugeinheit 22c zumindest ein weiteres Zugseil 42c auf, welches dazu vorgesehen ist, eine Drehbewegung des Kurvenelements 26c in eine Bewegung des Anzeigeelements 14c entlang der Führungseinheit 40c zu überführen. Das weitere Zugseil 42c ist dazu vorgesehen, bei einer Drehbewegung des Kurvenelements 26c auf eine drehfest mit der Kurvenelement 26c verbundene Spulrolle 76c aufgewickelt oder von der Spulrolle 76c abgewickelt zu werden. Das weitere Zugseil 42c ist mit einem Ende mit dem Anzeigeelement 14c verbunden. Zwischen der Spulrolle 76c und dem Anzeigeelement 14c ist das weitere Zugseil 42c mittels einer Umlenkrolle 78c derart umgelenkt, dass es parallel zu der Führungseinheit 40c verläuft. Das Anzeigeelement 14c ist mittels einer Feder 80c mit einer entgegen einer Zugkraft des weiteren Zugseils 42c wirkenden Kraft beaufschlagt. Zudem weist die Seilzugeinheit 22c eine Spannrolle 44c auf, welche dazu vorgesehen ist, eine Zuglänge des Zugseils 42c zu variieren, wodurch die Anzeigeeinheit 16c an Bearbeitungswerkzeuge 18c mit unterschiedlichen Durchmessern angepasst werden kann.

Des Weiteren umfasst die Schnittlängenanzeigevorrichtung 10c eine Bewegungskopplungseinheit 62c, die die Seilzugeinheit 22c der Anzeigeeinheit 16c bewegungsabhängig mit einem Schnitttiefeneinstellelement 66c der Schnitttiefeneinstelleinheit 46c verbindet. Ein Ende des Zugseils 28c ist mit einem Bewegungskopplungselement 64c der Bewegungskopplungseinheit 62c verbunden. Zwischen dem Kurvenelement 26c und dem Bewegungskopplungselement 64c ist das Zugseil 28c mittels einer Umlenkrolle 70c umgelenkt. Das Schnitttiefeneinstellelement 66c ist zu einer Einstellung einer Schnitttiefe des Bearbeitungswerkzeugs 18c beweglich an einem Führungsbahnelement 68c der Schnitttiefeneinstelleinheit 46c gelagert. Das Führungsbahnelement 68c ist an der Schutzeinheit 52c angeordnet. Bei einer Bewegung des Schnitttiefeneinstellelements 66c relativ zum Führungsbahnelement 68c wird das Bewegungskopplungselement 64c infolge der Verbindung mit dem Schnitttiefeneinstellelement 66a ebenfalls relativ zum Führungsbahnelement 68c entlang eines Verlaufs des Führungsbahnelements 68c bewegt, wodurch eine Bewegung des Zugseils 28c bewirkt wird. Die Bewegung des Zugseils 28c resultiert in einer Drehbewegung des Kurvenelements 26c und einem damit verbundenen Aufwickeln oder Abwickeln des zweiten Zugseils 42c, wodurch eine translatorische Bewegung des Anzeigeelements 14c entlang der Führungseinheit 40c bewirkt wird. Ein Verfahren des weiteren Anzeigeelements kann auf gleiche Weise realisiert werden.

## Patentansprüche

1. Schnittlängenanzeigevorrichtung für eine insbesondere tragbare Werkzeugmaschine (12a; 12b; 12c), mit zumindest einer zumindest ein beweglich gelagertes Anzeigeelement (14a; 14b; 14c) umfassenden Anzeigeeinheit (16a; 16b; 16c) zu einer Anzeige zumindest einer Position einer Schnittkante eines Bearbeitungswerkzeugs (18a; 18b; 18c) auf einem zu bearbeitenden Werkstück (20a; 20b; 20c) in Abhängigkeit einer eingestellten Schnitttiefe des Bearbeitungswerkzeugs (18a; 18b; 18c), **gekennzeichnet durch** eine Seilzugeinheit (22a; 22b; 22c), welche dazu vorgesehen ist, eine Lage des Anzeigeelements (14a; 14b; 14c) in Abhängigkeit der eingestellten Schnitttiefe des Bearbeitungswerkzeugs (18a; 18b; 18c) zu verändern.

2. Schnittlängenanzeigevorrichtung nach Anspruch 1, **dadurch gekennzeichnet, dass** die Seilzugeinheit (22a; 22b; 22c) zumindest ein um eine Drehachse (24a; 24b; 24c) drehbar gelagertes Kurvenelement (26a; 26b; 26c) und zumindest ein Zugseil (28a; 28b; 28c) aufweist, welches dazu vorgesehen ist, das Kurvenelement (26a; 26b; 26c) durch Abwickeln entlang zumindest einer Kurvenoberfläche (30a; 30b; 30c) des Kurvenelements (26a; 26b; 26c) in eine Drehbewegung zu versetzen.

3. Schnittlängenanzeigevorrichtung nach Anspruch 2, **dadurch gekennzeichnet, dass** die Drehbewegung dazu vorgesehen ist, eine Veränderung der Lage des Anzeigeelements (14a; 14b; 14c) zu bewirken.

4. Schnittlängenanzeigevorrichtung nach Anspruch 2 oder 3, **dadurch gekennzeichnet, dass** wenigstens zwei Punkte der Kurvenoberfläche (30a; 30b; 30c) des Kurvenelements (26a; 26b; 26c) zur Erzielung einer Veränderung einer Drehgeschwindigkeit des Kurvenelements (26a; 26b; 26c) während einer gleichförmigen Bewegung des Zugseils (28a; 28b; 28c) verschiedene Abstände zur Drehachse (24a; 24b; 24c) aufweisen.

5. Schnittlängenanzeigevorrichtung nach einem der Ansprüche 2 bis 4, **dadurch gekennzeichnet, dass** das Zugseil (28a, 28c) zumindest abschnittsweise über eine Außenkontur (32a; 32c) des Kurvenelements (26a; 26c) geführt ist, welche in zumindest einem Abschnitt (34a; 34c) verschiedene Außenradien (36a; 36c) aufweist.

6. Schnittlängenanzeigevorrichtung nach einem der Ansprüche 2 bis 4, **dadurch gekennzeichnet, dass** das Kurvenelement (26b) zumindest eine Spiralbahn (38b) aufweist, entlang welcher das Zugseil (28b) zumindest abschnittsweise geführt ist.

7. Schnittlängenanzeigevorrichtung nach einem der Ansprüche 2 bis 6, **dadurch gekennzeichnet, dass** das Anzeigeelement (14a; 14b) drehfest mit dem Kurvenelement (26a; 26b) verbunden ist.

8. Schnittlängenanzeigevorrichtung nach einem der Ansprüche 2 bis 6, **gekennzeichnet durch** zumindest eine Führungseinheit (40c), entlang welcher das Anzeigeelement (14c) verschiebbar gelagert ist.

9. Schnittlängenanzeigevorrichtung nach Anspruch 8, **dadurch gekennzeichnet, dass** die Seilzugeinheit (22c) zumindest ein weiteres Zugseil (42c) aufweist, welches dazu vorgesehen ist, eine Drehbewegung des Kurvenelements (26c) in eine Bewegung des Anzeigeelements (14c) entlang der Führungseinheit (40c) zu überführen.

10. Schnittlängenanzeigevorrichtung nach einem der vorhergehenden Ansprüche, **dadurch gekennzeichnet, dass** die Seilzugeinheit (22a; 22b; 22c) zumindest eine Spannrolle (44a; 44b; 44c) aufweist, welche dazu vorgesehen ist, eine Zuglänge des Zugseils (28a; 28b; 28c) zu variieren.

11. Schnittlängenanzeigevorrichtung nach einem der vorhergehenden Ansprüche, **dadurch gekennzeichnet, dass** die Anzeigeeinheit (16a; 16b; 16c) als Laseranzeigeeinheit ausgebildet ist.

12. Werkzeugmaschine, insbesondere tragbare Werkzeugmaschine, insbesondere Kreissäge, mit zumindest einer Schnittlängenanzeigevorrichtung (10a; 10b; 10c) nach einem der vorhergehenden Ansprüche.

## Claims

1. Cutting length display apparatus for an in particular portable power tool (12a; 12b; 12c), having at least one display unit (16a; 16b; 16c), comprising at least one movably mounted display element (14a; 14b; 14c), for displaying at least one position of a cutting edge of a machining tool (18a; 18b; 18c) on a workpiece (20a; 20b; 20c) to be machined in dependence on a set cutting depth of the machining tool (18a; 18b; 18c), **characterized by** a cable system unit (22a; 22b; 22c), which is provided for changing a pose of the display element (14a; 14b; 14c) in dependence on the set cutting depth of the machining tool (18a; 18b; 18c).

2. Cutting length display apparatus according to Claim 1, **characterized in that** the cable system unit (22a; 22b; 22c) has at least one cam element (26a; 26b; 26c), which is mounted so as to be rotatable about an axis of rotation (24a; 24b; 24c), and at least one pull cable (28a; 28b; 28c), which is provided for inducing a rotational movement of the cam element (26a; 26b; 26c) by way of unwinding along at least one cam surface (30a; 30b; 30c) of the cam element (26a; 26b; 26c).

3. Cutting length display apparatus according to Claim 2, **characterized in that** the rotational movement is provided for effecting a change in the pose of the display element (14a; 14b; 14c).

4. Cutting length display apparatus according to Claim 2 or 3, **characterized in that** at least two points on the cam surface (30a; 30b; 30c) of the cam element (26a; 26b; 26c) have different distances from the axis of rotation (24a; 24b; 24c) for achieving a change in a rotational speed of the cam element (26a; 26b; 26c) during a uniform movement of the pull cable (28a; 28b; 28c).

5. Cutting length display apparatus according to one of Claims 2 to 4, **characterized in that** the pull cable (28a, 28c) is guided at least sectionally over an outer contour (32a; 32c) of the cam element (26a; 26c), which has different outer radii (36a; 36c) in at least one section (34a; 34c).

6. Cutting length display apparatus according to one of Claims 2 to 4, **characterized in that** the cam element (26b) has at least one spiral track (38b), along which the pull cable (28b) is guided at least sectionally.

7. Cutting length display apparatus according to one of Claims 2 to 6, **characterized in that** the display element (14a; 14b) is connected to the cam element (26a; 26b) for rotation therewith.

8. Cutting length display apparatus according to one of Claims 2 to 6, **characterized by** at least one guide unit (40c), with the display element (14c) being mounted such that it is displaceable along it.

9. Cutting length display apparatus according to Claim 8, **characterized in that** the cable system unit (22c) has at least one further pull cable (42c), which is provided for converting a rotational movement of the cam element (26c) into a movement of the display element (14c) along the guide unit (40c).

10. Cutting length display apparatus according to one of the preceding claims, **characterized in that** the cable system unit (22a; 22b; 22c) has at least one tensioning pulley (44a; 44b; 44c), which is provided for varying a pull length of the pull cable (28a; 28b; 28c).

11. Cutting length display apparatus according to one of the preceding claims, **characterized in that** the display unit (16a; 16b; 16c) is configured as a laser display unit.

12. Power tool, in particular portable power tool, in particular circular saw, having at least one cutting length display apparatus (10a; 10b; 10c) according to one of the preceding claims.

## Revendications

1. Dispositif d'affichage de longueur de coupe pour une machine-outil en particulier portative (12a; 12b; 12c), avec une unité d'affichage (16a; 16b; 16c) comprenant au moins un élément d'affichage (14a; 14b; 14c) monté de façon mobile pour un affichage d'au moins une position d'une arête de coupe d'un outil d'usinage (18a; 18b; 18c) sur une pièce à usiner (20a; 20b; 20c) en fonction d'une profondeur de coupe réglée de l'outil d'usinage (18a; 18b; 18c), **caractérisé par** une unité à câble de traction (22a; 22b; 22c), qui est prévue pour changer une position de l'élément d'affichage (14a; 14b; 14c) en fonction de la profondeur de coupe réglée de l'outil d'usinage (18a; 18b; 18c).

2. Dispositif d'affichage de longueur de coupe selon la revendication 1, **caractérisé en ce que** l'unité à câble de traction (22a; 22b; 22c) présente au moins un élément de came (26a; 26b; 26c) monté de façon rotative autour d'un axe de rotation (24a; 24b; 24c) et au moins un câble de traction (28a; 28b; 28c), qui est prévu pour mettre l'élément de came (26a; 26b; 26c) en mouvement de rotation par déroulement le long d'au moins une surface de came (30a; 30b; 30c) de l'élément de came (26a; 26b; 26c) .

3. Dispositif d'affichage de longueur de coupe selon la revendication 2, **caractérisé en ce que** le mouvement de rotation est prévu pour provoquer un changement de la position de l'élément d'affichage (14a; 14b; 14c).

4. Dispositif d'affichage de longueur de coupe selon une revendication 2 ou 3, **caractérisé en ce qu'**au moins deux points de la surface de came (30a; 30b; 30c) de l'élément de came (26a; 26b; 26c) présentent des distances différentes de l'axe de rotation (24a; 24b; 24c) pour produire un changement d'une vitesse de rotation de l'élément de came (26a; 26b; 26c) pendant un mouvement uniforme du câble de traction (28a; 28b; 28c).

5. Dispositif d'affichage de longueur de coupe selon l'une quelconque des revendications 2 à 4, **caractérisé en ce que** le câble de traction (28a, 28c) est guidé au moins partiellement sur un contour extérieur (32a; 32c) de l'élément de came (26a; 26c), qui présente des rayons extérieurs différents (36a; 36c) dans au moins une partie (34a; 34c).

6. Dispositif d'affichage de longueur de coupe selon l'une quelconque des revendications 2 à 4, **caractérisé en ce que** l'élément de came (26b) présente au moins un tracé en spirale (38b), le long duquel le câble de traction (28b) est guidé au moins partiellement.

7. Dispositif d'affichage de longueur de coupe selon l'une quelconque des revendications 2 à 6, **caractérisé en ce que** l'élément d'affichage (14a; 14b) est assemblé de façon calée en rotation à l'élément de came (26a; 26b) .

8. Dispositif d'affichage de longueur de coupe selon l'une quelconque des revendications 2 à 6, **caractérisé par** au moins une unité de guidage (40c), le long de laquelle l'élément d'affichage (14c) est monté de façon déplaçable.

9. Dispositif d'affichage de longueur de coupe selon la revendication 8, **caractérisé en ce que** l'unité à câble de traction (22c) présente au moins un autre câble de traction (42c), qui est prévu pour convertir un mouvement de rotation de l'élément de came (26c) en un mouvement de l'élément d'affichage (14c) le long de l'unité de guidage (40c).

10. Dispositif d'affichage de longueur de coupe selon l'une quelconque des revendications précédentes, **caractérisé en ce que** l'unité à câble de traction (22a; 22b; 22c) présente au moins un rouleau tendeur (44a; 44b; 44c), qui est prévu pour faire varier la longueur de traction du câble de traction (28a; 28b; 28c).

11. Dispositif d'affichage de longueur de coupe selon l'une quelconque des revendications précédentes, **caractérisé en ce que** l'unité d'affichage (16a; 16b; 16c) est formée par une unité d'affichage à laser.

12. Machine-outil, en particulier machine-outil portative, en particulier scie circulaire, avec au moins un dispositif d'affichage de longueur de coupe (10a; 10b; 10c) selon l'une quelconque des revendications précédentes.
